(19) Europäisches Patentamt
European Patent Office
Office européen des brevets

(11) EP 4 749 712 A1

## (12) EUROPEAN PATENT APPLICATION

(43) Date of publication:
27.05.2026 Bulletin 2026/22

(21) Application number: 25217202.8

(22) Date of filing: 20.11.2025

(51) International Patent Classification (IPC):
$H01M\ 4/36^{(2006.01)}$    $H01M\ 4/525^{(2010.01)}$
$H01M\ 4/505^{(2010.01)}$

(52) Cooperative Patent Classification (CPC):
H01M 4/505; H01M 4/131; H01M 4/364;
H01M 4/525; H01M 10/052; H01M 2004/021;
H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.11.2024 KR 20240166264

(71) Applicant: SK On Co., Ltd.
Seoul 03161 (KR)

(72) Inventors:
• DO, Young Hoon
Daejeon 34124 (KR)
• PARK, Jeong Eun
Daejeon 34124 (KR)
• PARK, Hye Jin
Daejeon 34124 (KR)

(74) Representative: Stolmár & Partner
Patentanwälte PartG mbB
Blumenstraße 17
80331 München (DE)

(54) **POSITIVE ELECTRODE FOR LITHIUM SECONDARY BATTERY, ELECTRODE ASSEMBLY, LITHIUM SECONDARY BATTERY AND MANUFACTURING METHOD OF POSITIVE ELECTRODE FOR LITHIUM SECONDARY BATTERY**

(57) The positive electrode for a lithium secondary battery according to the present disclosure may include: a positive electrode current collector; and a positive electrode active material layer formed on the positive electrode current collector and including a positive electrode active material, wherein the positive electrode active material includes nickel and manganese, a ratio of the content of nickel in the positive electrode active material to the content of manganese in the positive electrode active material is 8 or less, and a particle size distribution of the positive electrode active material defined by the following Equation 1 may be 0.8 or more and/or 1.3 or less.

[Equation 1]

$$\text{Particle size distribution} = (D90 - D10) / D50$$

(In Equation 1, D10, D50, and D90 are particle diameters of the positive electrode active material particles at points where cumulative volume percentages in a particle size distribution obtained by a particle size analyzer are 10%, 50%, and 90%, respectively.)

FIG. 2

EP 4 749 712 A1

**Description**

BACKGROUND OF THE INVENTION

1. Field

The present disclosure relates to a positive electrode for a lithium secondary battery, an electrode assembly, a lithium secondary battery, and a method for manufacturing a positive electrode for a lithium secondary battery.

2. Description of the Related Art

Lithium secondary batteries are being actively developed and applied because they have a high operating voltage and energy density per unit weight, and are advantageous in terms of charging speed and weight reduction.

The lithium secondary battery may include an electrode assembly including a positive electrode, a negative electrode, and a separator interposed between the positive electrode and the negative electrode, and an electrolyte impregnating the electrode assembly.

The positive electrode may include a positive electrode current collector and a positive electrode active material layer formed on the positive electrode current collector. The positive electrode active material layer may include a lithium metal oxide as a positive electrode active material.

For example, as the positive electrode active material, a nickel-cobalt-manganese-based (NCM-based) lithium metal oxide containing nickel, cobalt, and manganese, or a nickel-cobalt-aluminum-based (NCA-based) lithium metal oxide containing nickel, cobalt, and aluminum may be used.

However, the price of cobalt is relatively higher than that of other metals such as nickel and manganese. Accordingly, it is disadvantageous in terms of cost to use a large amount of lithium metal oxide particles containing a high concentration of cobalt. Therefore, development of lithium metal oxides that do not contain cobalt has been in progress. However, when lithium metal oxide particles do not contain cobalt, lifespan characteristics and resistance characteristics may be inferior.

SUMMARY OF THE INVENTION

According to one aspect of the present disclosure, a positive electrode, an electrode assembly, and a lithium secondary battery for which cost is reduced can be provided.

According to another aspect of the present disclosure, a positive electrode, an electrode assembly, and a lithium secondary battery having improved structural stability and conductivity can be provided.

According to still another aspect of the present disclosure, a positive electrode, an electrode assembly, and a lithium secondary battery having an extended lifespan can be provided.

Meanwhile, the present disclosure can be widely applied in green technology fields such as an electric vehicle, a battery charging station, and an energy storage system (ESS), as well as other battery-powered applications including photovoltaics and wind power.

In addition, the present disclosure can be used for eco-friendly mobility including electric vehicles and hybrid vehicles to prevent climate change by reducing air pollution and greenhouse gas emissions.

As a technical means to achieve the technical objects, a positive electrode for a lithium secondary battery according to the present disclosure may comprise: a positive electrode current collector; and a positive electrode active material layer formed on the positive electrode current collector and including a positive electrode active material, wherein the positive electrode active material includes nickel and manganese, a ratio of the content of nickel in the positive electrode active material to the content of manganese in the positive electrode active material is 8 or less, and a particle size distribution of the positive electrode active material defined by the following Equation 1 may be 0.8 or more and/or 1.3 or less.

$$[\text{Equation 1}]$$

$$\text{Particle size distribution} = (D90 - D10) / D50$$

(In Equation 1, D10, D50, and D90 are particle diameters of the positive electrode active material particles at points where cumulative volume percentages in a particle size distribution obtained by a particle size analyzer are 10%, 50%, and 90%, respectively.)

In one embodiment, the positive electrode active material may further include cobalt, and a content of cobalt among nickel, manganese, and cobalt in the positive electrode active material may be 10 mol% or less of a total of nickel, manganese, and cobalt in the positive electrode active material.

In one embodiment, a content of cobalt in the positive electrode active material may be 15,000 ppm or less based on a total weight of the positive electrode active material.

In one embodiment, a ratio of the content of nickel in the positive electrode active material to the content of manganese in the positive electrode active material may be 1.5 or more and/or 3.5 or less.

In one embodiment, a content of nickel among all elements of the positive electrode active material excluding lithium and oxygen may be 60 mol% or more and/or 80 mol% or less.

In one embodiment, a content of manganese among all elements of the positive electrode active material excluding lithium and oxygen may be 20 mol% or more and/or 35 mol% or less.

In one embodiment, a value of D90 of the positive electrode active material may be 7.5 $\mu$m or less.

In one embodiment, a value of D10 of the positive electrode active material may be 1.5 $\mu$m or more and/or 2.5 $\mu$m or less.

In one embodiment, a ratio (D50/D10) of D50 to D10 of the positive electrode active material may be 1.7 or more and/or 2.4 or less.

As a technical means to achieve the technical objects, an electrode assembly according to the present disclosure may comprise the above-described positive electrode for a lithium secondary battery and a negative electrode facing the positive electrode.

As a technical means to achieve the technical objects, a lithium secondary battery according to the present disclosure may comprise the above-described electrode assembly.

As a technical means to achieve the technical objects, a method for manufacturing a positive electrode for a lithium secondary battery according to the present disclosure may comprise: preparing a positive electrode slurry including a positive electrode active material; and applying the positive electrode slurry onto a current collector, wherein the positive electrode active material includes nickel and manganese, a ratio of the content of nickel in the positive electrode active material to the content of manganese in the positive electrode active material is 8 or less, and a particle size distribution of the positive electrode active material defined by the following Equation 1 may be 0.8 or more and/or 1.3 or less.

[Equation 1]

$$\text{Particle size distribution} = (D90 - D10) / D50$$

(In Equation 1, D10, D50, and D90 are particle diameters of the positive electrode active material particles at points where cumulative volume percentages in a particle size distribution obtained by a particle size analyzer are 10%, 50%, and 90%, respectively.)

In one embodiment, the preparing of the positive electrode slurry may include milling the positive electrode active material.

In one embodiment, a value of D90 of the positive electrode active material may be 7.5 $\mu$m or less.

In one embodiment, a value of D10 of the positive electrode active material may be 1.5 $\mu$m or more and/or 2.5 $\mu$m or less.

In one embodiment, a ratio (D50/D10) of D50 to D10 of the positive electrode active material may be 1.7 or more and/or 2.4 or less.

According to an embodiment of the present disclosure, a positive electrode, an electrode assembly, and a lithium secondary battery for which cost is reduced can be provided.

According to an embodiment of the present disclosure, a positive electrode, an electrode assembly, and a lithium secondary battery having improved structural stability and conductivity can be provided.

According to an embodiment of the present disclosure, a positive electrode, an electrode assembly, and a lithium secondary battery having an extended lifespan can be provided.

BRIEF DESCRIPTION OF THE DRAWINGS

FIG. 1 is a diagram showing a lithium secondary battery according to an embodiment of the present disclosure.
FIG. 2 is a cross-sectional view taken along line I-I' of FIG. 1.

DETAILED DESCRIPTION

The structural or functional descriptions of the embodiments disclosed in the present specification or application are merely illustrative for the purpose of explaining embodiments according to the technical idea of the present disclosure, and the embodiments according to the technical idea of the present disclosure may be implemented in various forms other than the embodiments disclosed in the present specification or application. Therefore, the technical idea of the present disclosure should not be construed as being limited to the embodiments described in the present specification or application.

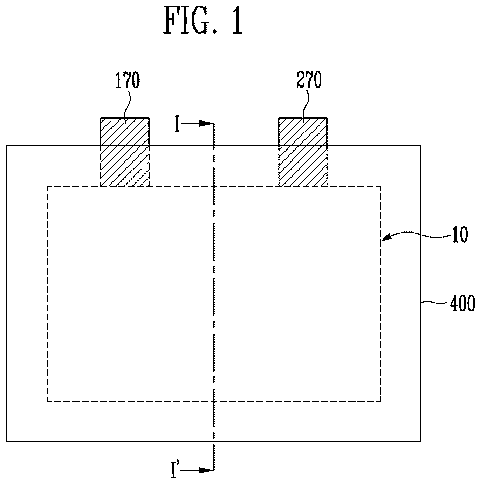

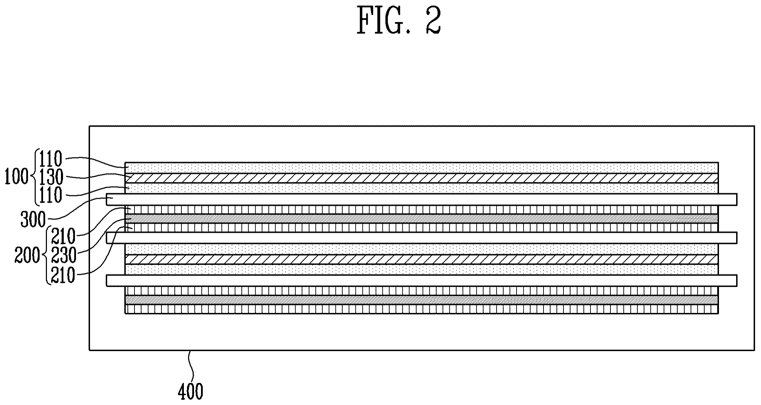

FIG. 1 is a diagram showing a lithium secondary battery according to an embodiment of the present disclosure. FIG. 2 is a cross-sectional view taken along line I-I' of FIG. 1.

Referring to FIGS. 1 and 2, a secondary battery according to an embodiment of the present disclosure may include an electrode assembly 10 including a negative electrode 100, a positive electrode 200, and a separator 300. The electrode assembly 10 may be accommodated together with an electrolyte in a case 400. The secondary battery according to an embodiment of the present disclosure may be manufactured, for example, in a cylindrical, prismatic, pouch, or coin type using a can.

Electrode tabs may respectively protrude from a negative electrode current collector 130 and a positive electrode current collector 230 and may extend to one side of the case 400. The electrode tabs may be fused together with one side of the case 400 to form a negative electrode lead 170 and a positive electrode lead 270 extending or exposed to the outside of the case 400.

The negative electrode 100 may include a negative electrode active material layer 110 and a negative electrode current collector 130.

The negative electrode active material layer 110 may be formed by being applied to the negative electrode current collector 130. The negative electrode active material layer 110 may be disposed on at least one surface of the negative electrode current collector 130.

The negative electrode current collector 130 may be disposed between a plurality of negative electrode active material layers 110. The negative electrode active material layer 110 may be disposed between the negative electrode current collector 130 and the separator 300. Although FIG. 2 illustrates that the negative electrode active material layers 110 are disposed on both surfaces of the negative electrode current collector 130, the embodiment is not limited thereto. For example, the negative electrode active material layer 110 may be disposed on one surface of the negative electrode current collector 130, and may not be disposed on the other surface thereof.

The negative electrode current collector 130 may include, for example, without limitation, copper, nickel, stainless steel, titanium, nickel foam, copper foam, or a polymer coated with a conductive metal. The negative electrode current collector 130 may have a thickness of, for example, 10 to 50 μm. However, the embodiment is not limited thereto.

The negative electrode active material layer 110 may include a negative electrode active material. As the negative electrode active material, a material capable of adsorbing and desorbing lithium ions may be used. For example, the negative electrode active material may include a carbon-based material such as crystalline carbon, amorphous carbon, a carbon composite, or carbon fiber; lithium metal; a lithium alloy; a silicon (Si)-containing material; or a tin (Sn)-containing material.

The amorphous carbon may include, for example, hard carbon, soft carbon, coke, mesocarbon microbeads (MCMB), or mesophase pitch-based carbon fiber (MPCF).

The crystalline carbon may include, for example, graphite-based carbon such as natural graphite, artificial graphite, graphitized coke, graphitized MCMB, or graphitized MPCF.

The lithium metal may include pure lithium metal or lithium metal having a protective layer formed thereon for suppressing dendrite growth or the like. In one embodiment, a lithium metal-containing layer deposited or coated on a negative electrode plate may be used as the negative electrode active material layer. In one embodiment, a lithium thin film layer may also be used as the negative electrode active material layer.

The lithium alloy may include, for example, aluminum, zinc, bismuth, cadmium, antimony, silicon, lead, tin, gallium, or indium.

The silicon-containing material may provide increased capacity characteristics. The silicon-containing material may include Si, SiOx (0 < x < 2), metal-doped SiOx (0 < x < 2), or a silicon-carbon composite. The metal may include lithium and/or magnesium, and the metal-doped SiOx (0 < x < 2) may include a metal silicate.

For example, a negative electrode slurry may be prepared by mixing the negative electrode active material in a solvent. After the negative electrode slurry is coated or deposited on a negative electrode plate, drying and rolling may be performed to manufacture the negative electrode active material layer 110. The coating process may be performed by a gravure coating, slot-die coating, multi-layer simultaneous die coating, imprinting, doctor blade coating, dip coating, bar coating, or casting method, but is not limited thereto. The negative electrode active material layer 110 may further include a binder, and may optionally further include a conductive material or a thickener.

In some embodiments, the negative electrode may further include a negative electrode active material layer in the form of lithium metal formed through a deposition or coating process.

The solvent for preparing the negative electrode mixture may include, for example, water, purified water, deionized water, distilled water, ethanol, isopropanol, methanol, acetone, n-propanol, or t-butanol. However, the embodiment is not limited thereto.

The binder included in the negative electrode active material layer 110 may include polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), or styrene-butadiene rubber (SBR). In one embodiment, a PVDF-based binder may be used as the binder.

The conductive material included in the negative electrode active material layer 110 may be added to enhance the conductivity of the active material layer and/or the mobility of lithium ions or electrons. For example, the conductive material may include a carbon-based conductive material such as graphite, carbon black, acetylene black, Ketjen black, graphene, carbon nanotubes, vapor-grown carbon fiber (VGCF), or carbon fiber, and/or a metal-based conductive material including a perovskite material such as tin, tin oxide, titanium oxide, $LaSrCoO_3$, or $LaSrMnO_3$, but is not limited thereto.

If necessary, the negative electrode active material layer 110 may further include a thickener and/or a dispersant. In one embodiment, the negative electrode active material layer 110 may include a thickener such as carboxymethyl cellulose (CMC).

In some embodiments, an SBR (styrene-butadiene rubber)-based binder, a carboxymethyl cellulose (CMC) binder, a polyacrylic acid-based binder, or a poly(3,4-ethylenedioxythiophene) (PEDOT)-based binder may be used as the negative electrode binder.

The positive electrode 200 may include a positive electrode active material layer 210 and a positive electrode current collector 230.

The positive electrode active material layer 210 may be formed by being applied to the positive electrode current collector 230. The positive electrode active material layer 210 may be disposed on at least one surface of the positive electrode current collector 230.

The positive electrode current collector 230 may be disposed between a plurality of positive electrode active material layers 210. The positive electrode active material layer 210 may be disposed between the separator 300 and the positive electrode current collector 230. Although FIG. 2 illustrates that the positive electrode active material layers 210 are disposed on both surfaces of the positive electrode current collector 230, the embodiment is not limited thereto. For example, the positive electrode active material layer 210 may be disposed on one surface of the positive electrode current collector 230 and may not be disposed on the other surface thereof.

The positive electrode current collector 230 may include stainless steel, nickel, aluminum, titanium, or an alloy thereof. The positive electrode current collector 230 may include aluminum or stainless steel surface-treated with carbon, nickel, titanium, or silver. The positive electrode current collector 230 may have a thickness of, for example, 10 to 50 μm. However, the embodiment is not limited thereto.

The positive electrode active material layer 210 may include a positive electrode active material. The positive electrode active material may include a compound capable of reversibly intercalating and deintercalating lithium ions.

According to exemplary embodiments, the positive electrode active material may include a lithium-transition metal oxide. For example, it may include a lithium-nickel metal oxide. The lithium-nickel metal oxide may further include at least one of cobalt (Co), manganese (Mn), and aluminum (Al).

In some embodiments, the positive electrode active material or the lithium-nickel metal oxide may include a layered structure or a crystal structure represented by the following Chemical Formula 1.

[Chemical Formula 1] $\quad\quad\quad Li_xNi_aM_bO_{2+z}$

In Chemical Formula 1, x may be $0.9 \leq x \leq 1.2$, a may be $0.6 \leq a \leq 0.99$, b may be $0.01 \leq b \leq 0.4$, and z may be $-0.5 \leq z \leq 0.1$. M may include Co, Mn, and/or Al.

The chemical structure represented by Chemical Formula 1 indicates bonding relationships included in the layered structure or crystal structure of the positive electrode active material and does not exclude the presence of other additional elements. For example, M may include Co and/or Mn, and Co and/or Mn may serve as main active elements of the positive electrode active material together with Ni. Chemical Formula 1 is provided to represent the bonding relationships of the main active elements and should be understood to encompass the introduction or substitution of additional elements.

In one embodiment, auxiliary elements for improving the chemical stability of the positive electrode active material or the layered/crystal structure may be further included in addition to the main active elements. The auxiliary elements may be incorporated together within the layered/crystal structure to form bonds, and in this case, they should also be understood to fall within the range of the chemical structure represented by Chemical Formula 1.

The auxiliary elements may include at least one selected from Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also serve as auxiliary active elements contributing to the capacity/output activity of the positive electrode active material together with Co or Mn, for example, Al.

In one embodiment, M in Chemical Formula 1 may include Mn. That is, the positive electrode active material may include nickel and manganese.

In one embodiment, when M in Chemical Formula 1 is Mn, a ratio (a/b) of a to b in Chemical Formula 1 may be 8 or less. That is, a ratio of the content of nickel in the positive electrode active material to the content of manganese in the positive electrode active material may be 8 or less. For example, the ratio (a/b) of a to b in Chemical Formula 1 may be 1.0 or more and/or 8 or less. In another example, the ratio (a/b) of a to b in Chemical Formula 1 may be 1.2 or more and/or 4.0 or less. Depending on the ratio of the contents of manganese and nickel in the positive electrode active material according to an embodiment, it is possible to improve both the capacity of the positive electrode and the lifespan stability and capacity retention characteristics.

In one embodiment, when M in Chemical Formula 1 is Mn, a ratio (a/b) of a to b in Chemical Formula 1 may be 1.5 or more and/or 3.5 or less. That is, a ratio of the content of nickel in the positive electrode active material to the content of manganese in the positive electrode active material may be 1.5 or more and/or 3.5 or less. For example, when M in Chemical Formula 1 is Mn, the ratio (a/b) of a to b in Chemical Formula 1 may be 1.85 or more and/or 3.46 or less. Depending on the ratio of the contents of manganese and nickel in the positive electrode active material according to an embodiment, it is possible to improve both the capacity of the positive electrode and the lifespan stability and capacity retention characteristics.

In one embodiment, a ratio of a to a sum of a and b in Chemical Formula 1 may be 0.6 or more and/or 0.8 or less. That is, a content of nickel among all elements of the positive electrode active material excluding lithium and oxygen may be 60 mol% or more and/or 80 mol% or less. For example, the content of nickel among all elements of the positive electrode active material excluding lithium and oxygen may be 61 mol% or more and/or 76 mol% or less. For example, when M includes both Co and Mn, a content of nickel among nickel, manganese, and cobalt in the positive electrode active material may be 61 mol% or more and/or 76 mol% or less of a total of nickel, manganese, and cobalt in the positive electrode active material.

In one embodiment, when M in Chemical Formula 1 is Mn, a ratio of b to a sum of a and b may be 0.2 or more and/or 0.35 or less. That is, a content of manganese among all elements of the positive electrode active material excluding lithium and oxygen may be 20 mol% or more and/or 35 mol% or less. For example, the content of manganese among all elements of the positive electrode active material excluding lithium and oxygen may be 21 mol% or more and/or 33 mol% or less. For example, when M includes both Co and Mn, a content of manganese among nickel, manganese, and cobalt in the positive electrode active material may be 21 mol% or more and/or 33 mol% or less of a total of nickel, manganese, and cobalt in the positive electrode active material. By controlling the content of manganese, it is possible to improve lifespan stability and capacity retention characteristics of the lithium secondary battery including the positive electrode active material.

In one embodiment, M in Chemical Formula 1 may include both Mn and Co. In this case, the positive electrode active material may include a layered structure or a crystal structure represented by the following Chemical Formula 1-1.

$$[\text{Chemical Formula 1-1}] \qquad Li_xNi_aCO_{b1}Mn_{b2}O_{2+z}$$

In Chemical Formula 1-1, x may be $0.9 \leq x \leq 1.2$, a may be $0.6 \leq a \leq 0.99$, b1 may be $0.01 \leq b1 \leq 0.4$, b2 may be $0.01 \leq b2 \leq 0.4$, and z may be $-0.5 \leq z \leq 0.1$.

Co and Mn may serve as main active elements of the positive electrode active material together with Ni. Chemical Formula 1-1 is provided to represent the bonding relationships of the main active elements and should be understood to encompass the introduction or substitution of additional elements.

In one embodiment, in addition to the main active elements, the above-described auxiliary elements for improving the chemical stability of the positive electrode active material or the layered/crystal structure may be further included. The auxiliary elements may be incorporated together within the layered/crystal structure to form bonds, and in this case, they should also be understood to fall within the range of the chemical structure represented by Chemical Formula 1-1.

In one embodiment, a ratio of b1 to a sum of a, b1, and b2 in Chemical Formula 1-1 may be 0.1 or less. That is, a content of cobalt among nickel, manganese, and cobalt in the positive electrode active material may be 10 mol% or less of a total of nickel, manganese, and cobalt in the positive electrode active material. For example, the content of cobalt among nickel, manganese, and cobalt in the positive electrode active material may be 2 mol% or more and/or 8 mol% or less, or 1 mol% or more and 7 mol% or less of a total of nickel, manganese, and cobalt in the positive electrode active material.

In one embodiment, a content of cobalt in the positive electrode active material may be 15,000 ppm or less based on a total weight of the positive electrode active material. The price of cobalt is relatively higher than that of other metals such as nickel and manganese. Accordingly, a positive electrode active material including a smaller amount of cobalt compared to nickel and manganese can have improved competitiveness in terms of manufacturing cost. On the other hand, when the positive electrode active material does not contain cobalt, the lifespan characteristics and resistance characteristics of a lithium secondary battery including the positive electrode active material may be inferior. Therefore, in one embodiment, a lithium secondary battery including a positive electrode active material containing a small amount of cobalt can have improved lifespan characteristics and resistance characteristics.

For example, the positive electrode active material or the lithium-nickel metal oxide may include a layered structure or a crystal structure represented by the following Chemical Formula 1-2.

[Chemical Formula 1-2]    $Li_xNi_aM1_{b1}M2_{b2}O_{2+z}$

In Chemical Formula 1-2, M1 may include Co, Mn, and/or Al, and M2 may include the above-described auxiliary elements. In Chemical Formula 1-2, x may be $0.9 \leq x \leq 1.2$, a may be $0.6 \leq a \leq 0.99$, (b1 + b2) may be $0.01 \leq b1 + b2 \leq 0.4$, and z may be $-0.5 \leq z \leq 0.1$.

The positive electrode active material may further include coating elements or doping elements. For example, elements that are substantially the same as or similar to the above-described auxiliary elements may be used as the coating elements or doping elements. For example, one or two or more of the above-described elements may be used alone or in combination as the coating elements or doping elements.

The coating elements or doping elements may be present on the surface of lithium-nickel metal oxide particles or may penetrate through the surface of the lithium-nickel metal composite oxide particles to be included in the bonding structure represented by Chemical Formula 1 or Chemical Formula 1-1.

The positive electrode active material may include a nickel-cobalt-manganese (NCM)-based lithium oxide. In this case, an NCM-based lithium oxide having an increased nickel content may be used.

Ni may serve as a transition metal associated with the output and capacity of a lithium secondary battery. Accordingly, by adopting a high-nickel (High-Ni) composition in the positive electrode active material as described above, a high-capacity positive electrode and a high-capacity lithium secondary battery can be provided.

However, as the nickel content increases, long-term storage stability and lifespan stability of the positive electrode or the secondary battery may decrease, and side reactions with the electrolyte may also increase. Nevertheless, according to exemplary embodiments, by including Co, electrical conductivity can be maintained, and by including Mn, lifespan stability and capacity retention characteristics can be improved.

A content of Ni in the NCM-based lithium oxide (for example, a molar fraction of nickel among a total number of moles of nickel, cobalt, and manganese) may be 0.6 or more, 0.7 or more, or 0.8 or more. In one embodiment, the content of Ni may be 0.8 to 0.95, 0.82 to 0.95, 0.83 to 0.95, 0.84 to 0.95, 0.85 to 0.95, or 0.88 to 0.95.

In one embodiment, the positive electrode active material may further include a lithium cobalt oxide-based active material, a lithium manganese oxide-based active material, a lithium nickel oxide-based active material, or a lithium iron phosphate (LFP)-based active material (for example, $LiFePO_4$).

In one embodiment, the positive electrode active material may include, for example, an Mn-rich active material, an LLO (Li-rich layered oxide) / OLO (Over-Lithiated Oxide) active material, or a Co-less active material having a chemical structure or crystal structure represented by the following Chemical Formula 2.

[Chemical Formula 2]    $p[Li_2MnO_3]\cdot(1-p)[Li_qJO_2]$

In Chemical Formula 2, $0 < p < 1$, $0.9 \leq q \leq 1.2$, and J may include at least one element selected from Mn, Ni, Co, Fe, Cr, V, Cu, Zn, Ti, Al, Mg, and B.

In one embodiment, the positive electrode active material according to an embodiment may have a particle size distribution of 0.8 or more and/or 1.3 or less as defined by the following Equation 1.

[Equation 1]

Particle size distribution = (D90 – D10) / D50

In Equation 1, D10, D50, and D90 may be particle diameters of the positive electrode active material at points where cumulative volume percentages in a particle size distribution obtained by a particle size analyzer are 10%, 50%, and 90%, respectively.

For example, the particle size distribution of the positive electrode active material may be measured by a laser diffraction method using a laser diffraction/scattering-type particle size measuring device (for example, Mastersizer 3000, Malvern Instruments).

For example, D10 may refer to a particle diameter at a point where the cumulative volume, obtained by accumulating the diameters of all precursor particles from the smaller side, reaches 10% of the total cumulative volume of all particles. Similarly, D50 may refer to a particle diameter at a point where the cumulative volume reaches 50% of the total cumulative volume of all particles, and D90 may refer to a particle diameter at a point where the cumulative volume reaches 90% of the total cumulative volume of all particles.

The particle size distribution may be provided as an index representing, for example, the degree of broadness of the particle size distribution.

In one embodiment, a value of D90 of the positive electrode active material may be 7.5 μm or less. For example, the value of D90 of the positive electrode active material may be 6 μm or more and/or 7.2 μm or less.

In one embodiment, a value of D10 of the positive electrode active material may be 1.5 μm or more and/or 2.5 μm or less. For example, the value of D10 of the positive electrode active material may be 1.8 μm or more and/or 2.3 μm or less.

In one embodiment, a ratio (D50/D10) of D50 to D10 of the positive electrode active material may be 1.7 or more and/or 2.4 or less. For example, the ratio (D50/D10) of D50 to D10 of the positive electrode active material may be 1.72 or more and/or 2.34 or less.

A method for manufacturing a positive electrode for a lithium secondary battery including the positive electrode active material may include preparing a positive electrode slurry and applying the positive electrode slurry onto a current collector. For example, the positive electrode slurry may be prepared by mixing the positive electrode active material in a solvent. During the preparation of the positive electrode slurry, the positive electrode active material may be milled. That is, the preparing of the positive electrode slurry may include milling the positive electrode active material.

After coating the positive electrode slurry on the positive electrode current collector, drying and rolling may be performed to form a positive electrode active material layer. The coating process may be performed by a gravure coating, slot-die coating, multi-layer simultaneous die coating, imprinting, doctor blade coating, dip coating, bar coating, or casting method, but is not limited thereto. The positive electrode active material layer may further include a binder and may optionally further include a conductive material or a thickener.

The solvent used for manufacturing the positive electrode active material layer may include, for example, N-methyl-2-pyrrolidone (NMP), dimethylformamide, dimethylacetamide, N,N-dimethylaminopropylamine, ethylene oxide, or tetrahydrofuran. However, the embodiment is not limited thereto.

If necessary, the positive electrode active material layer may further include a thickener and/or a dispersant. In one embodiment, the positive electrode active material layer may include a thickener such as carboxymethyl cellulose (CMC).

The binder may include polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), or styrene-butadiene rubber (SBR). In one embodiment, a PVDF-based binder may be used as the positive electrode binder.

The conductive material may be added to enhance the conductivity of the positive electrode active material layer and/or the mobility of lithium ions or electrons. For example, the conductive material may include a carbon-based conductive material such as graphite, carbon black, acetylene black, Ketjen black, graphene, carbon nanotubes, vapor-grown carbon fiber (VGCF), or carbon fiber, and/or a metal-based conductive material including a perovskite material such as tin, tin oxide, titanium oxide, $LaSrCoO_3$, or $LaSrMnO_3$, but is not limited thereto.

The separator 300 may be disposed between the negative electrode 100 and the positive electrode 200. The separator 300 may be configured to prevent electrical short-circuiting between the negative electrode 100 and the positive electrode 200 and to allow ionic flow to occur. Depending on the embodiment, the thickness of the separator 300 may be 10 μm to 20 μm; however, the present disclosure is not limited thereto.

For example, the separator 300 may include a porous polymer film or a porous nonwoven fabric. The porous polymer film may include a polyolefin-based polymer such as an ethylene polymer, a propylene polymer, an ethylene/-butene copolymer, an ethylene/hexene copolymer, or an ethylene/methacrylate copolymer. The porous nonwoven fabric may include high-melting-point glass fibers or polyethylene terephthalate (PET) fibers. The separator 300 may also include a ceramic-based material. For example, inorganic particles may be coated on a polymer film or dispersed within the polymer film to improve heat resistance.

The separator 300 may have a single-layer or multilayer structure including the above-described polymer film and/or nonwoven fabric.

It is understood by those skilled in the art that the plurality of exemplary embodiments described above are specific examples of the following aspects.

Aspect 1: A positive electrode for a lithium secondary battery, comprising: a positive electrode current collector; and a positive electrode active material layer formed on the positive electrode current collector and including a positive electrode active material, wherein the positive electrode active material includes nickel and manganese, a ratio of the content of nickel in the positive electrode active material to the content of manganese in the positive electrode active material is 8 or less, and a particle size distribution of the positive electrode active material defined by the following Equation 1 is 0.8 or more and/or 1.3 or less:

[Equation 1]

Particle size distribution = (D90 - D10) / D50

In Equation 1, D10, D50, and D90 are particle diameters of the positive electrode active material particles at points where cumulative volume percentages in a particle size distribution obtained by a particle size analyzer are 10%, 50%, and 90%, respectively.

Aspect 2: The positive electrode for a lithium secondary battery according to Aspect 1, wherein the positive electrode active material further includes cobalt, and a content of cobalt among nickel, manganese, and cobalt in the positive electrode active material is 10 mol% or less of a total of nickel, manganese, and cobalt in the positive electrode active material.

Aspect 3: The positive electrode for a lithium secondary battery according to Aspect 2, wherein a content of cobalt in the positive electrode active material is 15,000 ppm or less based on a total weight of the positive electrode active material.

Aspect 4: The positive electrode for a lithium secondary battery according to any one of Aspects 1 to 3, wherein a ratio of the content of nickel in the positive electrode active material to the content of manganese in the positive electrode active material is 1.5 or more and/or 3.5 or less.

Aspect 5: The positive electrode for a lithium secondary battery according to any one of Aspects 1 to 4, wherein a content of nickel among all elements of the positive electrode active material excluding lithium and oxygen is 60 mol% or more and/or 80 mol% or less.

Aspect 6: The positive electrode for a lithium secondary battery according to any one of Aspects 1 to 5, wherein a content of manganese among all elements of the positive electrode active material excluding lithium and oxygen is 20 mol% or more and/or 35 mol% or less.

Aspect 7: The positive electrode for a lithium secondary battery according to any one of Aspects 1 to 6, wherein a value of D90 of the positive electrode active material is 7.5 $\mu$m or less.

Aspect 8: The positive electrode for a lithium secondary battery according to any one of Aspects 1 to 7, wherein a value of D10 of the positive electrode active material is 1.5 $\mu$m or more and/or 2.5 $\mu$m or less.

Aspect 9: The positive electrode for a lithium secondary battery according to any one of Aspects 1 to 8, wherein a ratio (D50/D10) of D50 to D10 of the positive electrode active material is 1.7 or more and/or 2.4 or less.

Aspect 10: An electrode assembly comprising: a positive electrode for a lithium secondary battery according to any one of Aspects 1 to 9; and a negative electrode facing the positive electrode.

Aspect 11: A lithium secondary battery comprises the electrode assembly according to Aspect 10.

Aspect 12: A method for manufacturing a positive electrode for a lithium secondary battery, comprising: preparing a positive electrode slurry including a positive electrode active material; and applying the positive electrode slurry onto a current collector, wherein the positive electrode active material includes nickel and manganese, a ratio of the content of nickel in the positive electrode active material to the content of manganese in the positive electrode active material is 8 or less, and a particle size distribution of the positive electrode active material defined by the following Equation 1 is 0.8 or more and/or 1.3 or less:

[Equation 1]

$$\text{Particle size distribution} = (D90 - D10) / D50$$

In Equation 1, D10, D50, and D90 are particle diameters of the positive electrode active material particles at points where cumulative volume percentages in a particle size distribution obtained by a particle size analyzer are 10%, 50%, and 90%, respectively.

Aspect 13: The method for manufacturing a positive electrode for a lithium secondary battery according to Aspect 12, wherein the preparing of the positive electrode slurry includes milling the positive electrode active material.

Aspect 14: The method for manufacturing a positive electrode for a lithium secondary battery according to Aspect 12 or 13, wherein (a) a value of D90 of the positive electrode active material is 7.5 $\mu$m or less, and/or (b) a value of D10 of the positive electrode active material is 1.5 $\mu$m or more and/or 2.5 $\mu$m or less.

Aspect 15: The method for manufacturing a positive electrode for a lithium secondary battery according to any one of Aspects 12 to 14, wherein a ratio (D50/D10) of D50 to D10 of the positive electrode active material is 1.7 or more and/or 2.4 or less.

Hereinafter, embodiments of the present disclosure will be further described with reference to specific Experimental Examples. The embodiments and Comparative Examples included in the Experimental Examples are merely illustrative of the present disclosure and are not intended to limit the scope of the appended claims. It will be apparent to those skilled in the art that various changes and modifications can be made to the embodiments within the scope and spirit of the present disclosure, and it is to be understood that such changes and modifications are also included within the scope of the appended claims.

## Preparation Example 1

NiSO$_4$ and MnSO$_4$ were added to a reactor at a molar ratio of 75:25. Distilled water was added to the reactor and dispersed to prepare a transition metal dispersion. The distilled water was used after removing dissolved oxygen by bubbling nitrogen gas ($N_2$) for about 24 hours.

The prepared transition metal dispersion, an aqueous sodium hydroxide (NaOH) solution, and aqueous ammonia were respectively added to the reactor at appropriate feed rates so that the pH was adjusted to about 10.5, and a coprecipitation reaction was carried out while stirring at a constant rate. During the reaction, the temperature was maintained at about 60°C, and the coprecipitation reaction was performed for about 24 hours. After the coprecipitation reaction was completed, a precipitate was obtained by removing $Na^+$ and $SO_4^{2-}$ ions through a filtration device.

Thereafter, the precipitate was dried in an oven at about 120°C for about 10 hours to prepare a metal composite precursor, $Ni_{0.75}Mn_{0.25}(OH)_2$.

Lithium hydroxide ($LiOH \cdot H_2O$) and the prepared metal composite precursor were added to a dry high-speed mixer at a molar ratio of 1.04:1 (lithium hydroxide : metal composite precursor) and uniformly mixed to prepare a mixture.

The prepared mixture was placed in a calcination furnace and calcined (heat-treated) at a temperature of 850 to 900°C (with a heating rate of 3°C/min) for 16 hours. During the calcination, oxygen gas was continuously supplied at a flow rate of 5 L/min.

After the calcination was completed, the calcined product was naturally cooled to room temperature, pulverized, and classified to obtain a lithium metal oxide, $LiNi_{0.75}Mn_{0.25}O_2$, as a positive electrode active material.

For the positive electrode active material prepared according to Preparation Example 1, particle size distribution was measured, and the results are shown in Table 1 below.

## Preparation Example 2

In preparing the transition metal dispersion, $NiSO_4$, $CoSO_4$, and $MnSO_4$ were added to a reactor at a molar ratio of 76:2:22, and a coprecipitation reaction was carried out for 24 hours to prepare a metal composite precursor, $Ni_{0.76}CO_{0.02}Mn_{0.22}(OH)_2$. Except for the calcination condition, in which the calcination was performed at a temperature of 850 to 900°C (with a heating rate of 3°C/min) for 16 hours, the positive electrode active material was prepared in the same manner as in Preparation Example 1.

For the positive electrode active material prepared according to Preparation Example 2, particle size distribution was measured, and the results are shown in Table 1 below.

## Preparation Example 3

In preparing the transition metal dispersion, $NiSO_4$, $CoSO_4$, and $MnSO_4$ were added to a reactor at a molar ratio of 61:7:32, and a coprecipitation reaction was carried out for 24 hours to prepare a metal composite precursor, $Ni_{0.61}Co_{0.07}Mn_{0.32}(OH)_2$. Except for the calcination condition, in which the calcination was performed at a temperature of 875 to 925°C (with a heating rate of 3°C/min) for 16 hours, the positive electrode active material was prepared in the same manner as in Preparation Example 1.

For the positive electrode active material prepared according to Preparation Example 3, particle size distribution was measured, and the results are shown in Table 1 below.

## Preparation Example 4

In the preparation of the lithium metal oxide, except that the calcination was performed at a temperature of 875 to 925°C (with a heating rate of 3°C/min) for 20 hours, the positive electrode active material was prepared in the same manner as in Preparation Example 1.

For the positive electrode active material prepared according to Preparation Example 4, particle size distribution was measured, and the results are shown in Table 1 below.

## Preparation Example 5

A metal composite precursor, $Ni_{0.75}Mn_{0.25}(OH)_2$, was prepared by performing a coprecipitation reaction of the transition metal dispersion for 48 hours. Except for the calcination condition, in which the calcination was performed at a temperature of 800 to 850°C (with a heating rate of 3°C/min) for 12 hours, the positive electrode active material was prepared in the same manner as in Preparation Example 1.

For the positive electrode active material prepared according to Preparation Example 5, particle size distribution was measured, and the results are shown in Table 1 below.

### Preparation Example 6

In the preparation of the lithium metal oxide, except that the calcination was performed at a temperature of 875 to 925°C (with a heating rate of 3°C/min) for 20 hours, the positive electrode active material was prepared in the same manner as in Preparation Example 2.

For the positive electrode active material prepared according to Preparation Example 6, particle size distribution was measured, and the results are shown in Table 1 below.

### Preparation Example 7

A metal composite precursor, $Ni_{0.76}Co_{0.02}Mn_{0.22}(OH)_2$, was prepared by performing a coprecipitation reaction of the transition metal dispersion for 48 hours. Except for the calcination condition, in which the calcination was performed at a temperature of 800 to 850°C (with a heating rate of 3°C/min) for 12 hours, the positive electrode active material was prepared in the same manner as in Preparation Example 2.

For the positive electrode active material prepared according to Preparation Example 7, particle size distribution was measured, and the results are shown in Table 1 below.

### Preparation Example 8

In the preparation of the lithium metal oxide, except that the calcination was performed at a temperature of 900 to 950°C (with a heating rate of 3°C/min) for 20 hours, the positive electrode active material was prepared in the same manner as in Preparation Example 3.

For the positive electrode active material prepared according to Preparation Example 8, particle size distribution was measured, and the results are shown in Table 1 below.

### Preparation Example 9

A metal composite precursor, $Ni_{0.61}Co_{0.07}Mn_{0.32}(OH)_2$, was prepared by performing a coprecipitation reaction of the transition metal dispersion for 48 hours. Except for the calcination condition, in which the calcination was performed at a temperature of 850 to 900°C (with a heating rate of 3°C/min) for 12 hours, the positive electrode active material was prepared in the same manner as in Preparation Example 3.

For the positive electrode active material prepared according to Preparation Example 9, particle size distribution was measured, and the results are shown in Table 1 below.

### Preparation Example 10

In preparing the transition metal dispersion, $NiSO_4$, $CoSO_4$, and $MnSO_4$ were added to a reactor at a molar ratio of 88:2:10, and a coprecipitation reaction was carried out for 24 hours to prepare a metal composite precursor, $Ni_{0.88}Co_{0.02}Mn_{0.10}(OH)_2$. Except for the calcination condition, in which the calcination was performed at a temperature of 825 to 875°C (with a heating rate of 3°C/min) for 16 hours, the positive electrode active material was prepared in the same manner as in Preparation Example 1.

For the positive electrode active material prepared according to Preparation Example 10, particle size distribution was measured, and the results are shown in Table 1 below.

### Preparation Example 11

A metal composite precursor, $Ni_{0.88}Co_{0.02}Mn_{0.10}(OH)_2$, was prepared by performing a coprecipitation reaction of the transition metal dispersion for 48 hours. Except for the calcination condition, in which the calcination was performed at a temperature of 750 to 800°C (with a heating rate of 3°C/min) for 12 hours, the positive electrode active material was prepared in the same manner as in Preparation Example 1.

For the positive electrode active material prepared according to Preparation Example 11, particle size distribution was measured, and the results are shown in Table 1 below.

[Table 1]

| Classification | positive electrode active material composition | D10 (μm) | D50 (μm) | D90 (μm) | D50/D10 | particle size distribution ((D90-D10)/D50) |
|---|---|---|---|---|---|---|
| Preparation Example 1 | $LiNi_{0.75}Mn_{0.25}O_2$ | 1.9 | 3.5 | 6.3 | 1.84 | 1.26 |
| Preparation Example 2 | $LiNi_{0.76}Co_{0.02}Mn_{0.22}O_2$ | 2.2 | 3.8 | 6.5 | 1.72 | 1.13 |
| Preparation Example 3 | $LiNi_{0.61}Co_{0.07}Mn_{0.32}O_2$ | 2.1 | 4.9 | 7.1 | 2.33 | 1.02 |
| Preparation Example 4 | $LiNi_{0.75}Mn_{0.25}O_2$ | 2.7 | 3.8 | 8.6 | 1.41 | 1.55 |
| Preparation Example 5 | $LiNi_{0.75}Mn_{0.25}O_2$ | 8.9 | 10.0 | 12.5 | 1.12 | 0.36 |
| Preparation Example 6 | $LiNi_{0.76}Co_{0.02}Mn_{0.22}O_2$ | 3.1 | 4.7 | 10.0 | 1.52 | 1.47 |
| Preparation Example 7 | $LiNi_{0.76}Co_{0.02}Mn_{0.22}O_2$ | 7.5 | 11 | 15.9 | 1.47 | 0.76 |
| Preparation Example 8 | $LiNi_{0.61}Co_{0.07}Mn_{0.32}O_2$ | 3.9 | 4.8 | 10.3 | 1.23 | 1.33 |
| Preparation Example 9 | $LiNi_{0.61}Co_{0.07}Mn_{0.32}O_2$ | 10.6 | 13 | 16 | 1.23 | 0.42 |
| Preparation Example 10 | $LiNi_{0.88}Co_{0.02}Mn_{0.1}O_2$ | 1.9 | 3.7 | 5.8 | 1.95 | 1.05 |
| Preparation Example 11 | $LiNi_{0.88}Co_{0.02}Mn_{0.1}O_2$ | 7.3 | 10.5 | 16.2 | 1.44 | 0.85 |

For the positive electrode active materials prepared according to the above-described Preparation Examples, particle size measurements were performed using a laser diffraction/scattering-type particle size analyzer (Mastersizer 3000, Malvern).

Specifically, prior to measurement, the laser intensity was set to 70% or higher, the refractive index was set to 1.741, and the absorption index was set to 1. Under solvent conditions using 500 mL of distilled water, the sample was introduced under a laser obscuration condition of 15±2%. Thereafter, 2 mL of a 5 wt.% $(NaPO_3)_6$ dispersant solution was added, and the sample was dispersed for 1 minute under an ultrasonic power of 80%. Then, particle size measurement was carried out to obtain a particle diameter-volume distribution.

From the obtained particle diameter-volume distribution, D10, D50, and D90 were determined and substituted into Equation 1 to calculate the particle size distribution. The results are shown in Table 1 above.

## Example 1

As a positive electrode active material, the lithium metal oxide prepared in Preparation Example 1 was used. A positive electrode slurry was prepared by mixing the positive electrode active material, carbon black as a conductive material, and polyvinylidene fluoride (PVdF) as a binder at a weight ratio of 92:5:3. The positive electrode slurry was uniformly applied to a region of an aluminum foil (15 μm thick) excluding a protrusion portion (positive electrode tab) formed on one side, and then dried and rolled to a density of 3.5 g/cc to prepare a positive electrode. As a negative electrode active material, a mixture of artificial graphite and natural graphite at a weight ratio of 7:3 was used. A negative electrode slurry was prepared by mixing the negative electrode active material, styrene-butadiene rubber as a binder, and carboxymethyl cellulose as a thickener at a weight ratio of 97:1:2. The negative electrode slurry was uniformly applied to a region of a copper foil (15 μm thick) excluding a protrusion portion (negative electrode tab) formed on one side, and then dried and rolled to a density of 1.4 g/cc to prepare a negative electrode. The positive and negative electrodes were notched into a rectangular shape including the tab lead portions, and a polyethylene separator (20 μm thick) was interposed between the positive and negative electrodes to form an electrode assembly. Next, positive and negative leads were respectively welded to the positive and negative electrode tabs. The electrode assembly was housed inside a pouch (case) such that portions of the positive and negative leads were exposed to the outside, and three sides were sealed except for the electrolyte injection side. After injecting the electrolyte and sealing the remaining side, impregnation was carried out for 12 hours to manufacture a secondary battery. As the electrolyte, a 1 M $LiPF_6$ solution in a mixed solvent of EC/EMC/DEC (25:30:45 by volume) was prepared, and FEC (fluoroethylene carbonate) 1 wt%, VC (vinylethylene carbonate) 0.3 wt%, $LiPO_2F_2$ (lithium difluorophosphate) 1.0 wt%, PS (1,3-propane sultone) 0.5 wt%, and PRS (prop-1-ene-1,3-sultone) 0.5 wt% were added and mixed based on the total weight of the electrolyte. For the lithium secondary battery according to Example 1, internal resistance and capacity retention rate were evaluated, and the results are shown in Table 2 below.

**Example 2**

A lithium secondary battery was manufactured in the same manner as in Example 1, except that the positive electrode active material prepared in Preparation Example 2 was used. For the lithium secondary battery according to Example 2, internal resistance and capacity retention rate were evaluated, and the results are shown in Table 2 below.

**Example 3**

A lithium secondary battery was manufactured in the same manner as in Example 1, except that the positive electrode active material prepared in Preparation Example 3 was used. For the lithium secondary battery according to Example 3, internal resistance and capacity retention rate were evaluated, and the results are shown in Table 2 below.

**Comparative Example 1**

A lithium secondary battery was manufactured in the same manner as in Example 1, except that the positive electrode active material prepared in Preparation Example 4 was used. For the lithium secondary battery according to Comparative Example 1, internal resistance and capacity retention rate were evaluated, and the results are shown in Table 2 below.

**Comparative Example 2**

A lithium secondary battery was manufactured in the same manner as in Example 1, except that the positive electrode active material prepared in Preparation Example 5 was used. For the lithium secondary battery according to Comparative Example 2, internal resistance and capacity retention rate were evaluated, and the results are shown in Table 2 below.

**Comparative Example 3**

A lithium secondary battery was manufactured in the same manner as in Example 1, except that the positive electrode active material prepared in Preparation Example 6 was used. For the lithium secondary battery according to Comparative Example 3, internal resistance and capacity retention rate were evaluated, and the results are shown in Table 2 below.

**Comparative Example 4**

A lithium secondary battery was manufactured in the same manner as in Example 1, except that the positive electrode active material prepared in Preparation Example 7 was used. For the lithium secondary battery according to Comparative Example 4, internal resistance and capacity retention rate were evaluated, and the results are shown in Table 2 below.

**Comparative Example 5**

A lithium secondary battery was manufactured in the same manner as in Example 1, except that the positive electrode active material prepared in Preparation Example 8 was used. For the lithium secondary battery according to Comparative Example 5, internal resistance and capacity retention rate were evaluated, and the results are shown in Table 2 below.

**Comparative Example 6**

A lithium secondary battery was manufactured in the same manner as in Example 1, except that the positive electrode active material prepared in Preparation Example 9 was used. For the lithium secondary battery according to Comparative Example 6, internal resistance and capacity retention rate were evaluated, and the results are shown in Table 2 below.

**Comparative Example 7**

A lithium secondary battery was manufactured in the same manner as in Example 1, except that the positive electrode active material prepared in Preparation Example 10 was used. For the lithium secondary battery according to Comparative Example 7, internal resistance and capacity retention rate were evaluated, and the results are shown in Table 2 below.

## Comparative Example 8

A lithium secondary battery was manufactured in the same manner as in Example 1, except that the positive electrode active material prepared in Preparation Example 11 was used. For the lithium secondary battery according to Comparative Example 8, internal resistance and capacity retention rate were evaluated, and the results are shown in Table 2 below.

(1) Internal Resistance Characteristics

The lithium secondary batteries according to the Examples and Comparative Examples were charged and discharged three times at 25°C under CC/CV (0.5C-0.05C) conditions between 2.5 V and 4.3 V. Based on the second discharge capacity, the state of charge (SOC) was set to 50%, and the direct current resistance (DCR) was measured according to the following method.

For the cell set to SOC 50%, the voltage before discharge ($V_0$) and the voltage after discharging for 10 seconds at a 1C current ($V_1$) were measured, and DCR was calculated using the following equation. The results are shown in Table 2.

$$DCR = (V_0 - V_1) / 1C \text{ current (Ampere)}$$

(2) Capacity Retention

For the lithium secondary batteries according to the Examples and Comparative Examples, charging and discharging were performed three times at 45°C under CC/CV (0.5C-0.05C) conditions between 2.5 V and 4.3 V. Thereafter, charging (CC/CV 1.0C 4.3 V, 0.05C cut-off) and discharging (CC 1.0C 2.5 V cut-off) were repeatedly performed 500 times.

The capacity retention rate was evaluated as a percentage of the discharge capacity after 500 cycles divided by the discharge capacity after the first cycle. The results are shown in Table 2.

[Table 2]

| Classification | Internal Resistance (m$\Omega$) | Capacity Retention (500cyc, %) |
| --- | --- | --- |
| Example 1 | 3.78 | 91.3 |
| Example 2 | 3.59 | 92.3 |
| Example 3 | 3.76 | 93.1 |
| Comparative Example 1 | 5.23 | 90.1 |
| Comparative Example 2 | 3.71 | 76.0 |
| Comparative Example 3 | 5.18 | 90.7 |
| Comparative Example 4 | 3.58 | 78.3 |
| Comparative Example 5 | 4.97 | 89.6 |
| Comparative Example 6 | 3.81 | 84.4 |
| Comparative Example 7 | 3.88 | 70.2 |
| Comparative Example 8 | 5.29 | 67.2 |

Referring to Tables 1 and 2, the particle size distribution of the positive electrode active materials according to Preparation Examples 1, 2, and 3 is 0.8 or more and/or 1.3 or less. More specifically, the particle size distribution of the positive electrode active materials according to Preparation Examples 1, 2, and 3 is from 1 to 1.3.

The ratio of the nickel content to the manganese content in the positive electrode active materials according to Preparation Examples 1, 2, and 3 is 8 or less. More specifically, the ratio of the nickel content to the manganese content in the positive electrode active materials according to Preparation Examples 1, 2, and 3 is 1.5 or more and/or 3.5 or less.

The cobalt content in the positive electrode active materials according to Preparation Examples 1, 2, and 3 is 10 mol% or less of the total nickel, manganese, and cobalt in the positive electrode active materials. In addition, in the positive electrode active materials according to Preparation Examples 1, 2, and 3, the manganese content, among nickel, manganese, and cobalt excluding lithium and oxygen, is 20 mol% or more and/or 35 mol% or less.

The ratio (D50/D10) of D50 to D10 in the positive electrode active materials according to Preparation Examples 1, 2, and 3 is 1.7 or more and/or 2.4 or less.

The lithium secondary batteries according to Examples 1, 2, and 3 have an internal resistance value of 4.00 mΩ or less and a capacity retention rate of 90% or more, confirming that they exhibit superior resistance characteristics and lifespan characteristics compared to the positive electrode active materials of the Comparative Examples.

The particle size distribution of the positive electrode active material according to Preparation Example 4 is greater than 1.3. Although the contents of nickel, cobalt, and manganese in the positive electrode active material according to Preparation Example 4 are identical to those of the positive electrode active material according to Preparation Example 1, there is a difference in the range of the particle size distribution. In addition, the ratio (D50/D10) of D50 to D10 in the positive electrode active material according to Preparation Example 4 is 1.41, which is smaller than 1.7. Since the internal resistance value of the lithium secondary battery according to Comparative Example 1 is greater than 4.00 mΩ, it can be confirmed that the internal resistance characteristic is inferior to that of the lithium secondary battery according to Example 1.

The particle size distribution of the positive electrode active material according to Preparation Example 5 is smaller than 0.8. Although the contents of nickel, cobalt, and manganese in the positive electrode active material according to Preparation Example 5 are identical to those of the positive electrode active material according to Preparation Example 1, there is a difference in the range of the particle size distribution. In addition, the ratio (D50/D10) of D50 to D10 in the positive electrode active material according to Preparation Example 5 is 1.12, which is smaller than 1.7. The capacity retention rate of the lithium secondary battery according to Comparative Example 2 is 76%, confirming that it is inferior to the capacity retention rate of the lithium secondary battery according to Example 1.

The particle size distribution of the positive electrode active material according to Preparation Example 6 is greater than 1.3. Although the contents of nickel, cobalt, and manganese in the positive electrode active material according to Preparation Example 6 are identical to those of the positive electrode active material according to Preparation Example 2, there is a difference in the range of the particle size distribution. In addition, the ratio (D50/D10) of D50 to D10 in the positive electrode active material according to Preparation Example 6 is 1.52, which is smaller than 1.7. Since the internal resistance value of the lithium secondary battery according to Comparative Example 3 is greater than 4.00 mΩ, it can be confirmed that the internal resistance characteristic is inferior to that of the lithium secondary battery according to Example 2.

The particle size distribution of the positive electrode active material according to Preparation Example 7 is smaller than 0.8. Although the contents of nickel, cobalt, and manganese in the positive electrode active material according to Preparation Example 7 are identical to those of the positive electrode active material according to Preparation Example 2, there is a difference in the range of the particle size distribution. In addition, the ratio (D50/D10) of D50 to D10 in the positive electrode active material according to Preparation Example 7 is 1.47, which is smaller than 1.7. The capacity retention rate of the lithium secondary battery according to Comparative Example 4 is 78.3%, confirming that it is inferior to the capacity retention rate of the lithium secondary battery according to Example 2.

The particle size distribution of the positive electrode active material according to Preparation Example 8 is greater than 1.3. Although the contents of nickel, cobalt, and manganese in the positive electrode active material according to Preparation Example 8 are identical to those of the positive electrode active material according to Example 3, there is a difference in the range of the particle size distribution. In addition, the ratio (D50/D10) of D50 to D10 in the positive electrode active material according to Preparation Example 8 is 1.23, which is smaller than 1.7. The internal resistance value of the lithium secondary battery according to Comparative Example 5 is greater than 4.00 mΩ, and the capacity retention rate is less than 90%, confirming that both the internal resistance characteristic and the capacity retention rate are inferior to those of the lithium secondary battery according to Example 3.

The particle size distribution of the positive electrode active material according to Preparation Example 9 is smaller than 0.8. Although the contents of nickel, cobalt, and manganese in the positive electrode active material according to Preparation Example 9 are identical to those of the positive electrode active material according to Preparation Example 3, there is a difference in the range of the particle size distribution. In addition, the ratio (D50/D10) of D50 to D10 in the positive electrode active material according to Preparation Example 9 is 1.23, which is smaller than 1.7. The capacity retention rate of the lithium secondary battery according to Comparative Example 6 is 84.4%, confirming that it is inferior to the capacity retention rate of the lithium secondary battery according to Example 3.

The particle size distribution of the positive electrode active material according to Preparation Example 10 is 0.8 or more and/or 1.3 or less, and the ratio (D50/D10) of D50 to D10 is 1.7 or more and/or 2.4 or less. Meanwhile, the ratio of the nickel content to the manganese content in the positive electrode active material according to Preparation Example 10 is greater than 8. The capacity retention rate of the lithium secondary battery according to Comparative Example 7 is 70.2%, confirming that it is inferior to the capacity retention rates of the other Examples and Comparative Examples.

The particle size distribution of the positive electrode active material according to Preparation Example 11 is 0.8 or more and/or 1.3 or less. Meanwhile, the ratio (D50/D10) of D50 to D10 in the positive electrode active material according to Preparation Example 11 is 1.44, which is smaller than 1.7. In addition, the ratio of the nickel content to the manganese content in the positive electrode active material according to Preparation Example 11 is greater than 8. The internal resistance of the lithium secondary battery according to Comparative Example 8 is 5.29 m$\Omega$, and the capacity retention rate is 67.2%, confirming that it is inferior to the capacity retention rates of the other Examples and Comparative Examples.

The present disclosure may be embodied in various forms, and the scope of the present disclosure is not limited to the above-described embodiments. Therefore, it should be understood that any modified embodiment including the constituent elements of the present disclosure falls within the scope of the present disclosure.

**Claims**

1.    A positive electrode for a lithium secondary battery, comprising:

a positive electrode current collector; and
a positive electrode active material layer formed on the positive electrode current collector and including a positive electrode active material,
wherein the positive electrode active material includes nickel and manganese,
a ratio of the content of nickel in the positive electrode active material to the content of manganese in the positive electrode active material is 8 or less, and
a particle size distribution of the positive electrode active material defined by the following Equation 1 is 0.8 or more and/or 1.3 or less:

[Equation 1]

Particle size distribution = (D90 - D10) / D50

In Equation 1, D10, D50, and D90 are particle diameters of the positive electrode active material particles at points where cumulative volume percentages in a particle size distribution obtained by a particle size analyzer are 10%, 50%, and 90%, respectively.

2.    The positive electrode for a lithium secondary battery according to claim 1, wherein the positive electrode active material further includes cobalt, and a content of cobalt among nickel, manganese, and cobalt in the positive electrode active material is 10 mol% or less of a total of nickel, manganese, and cobalt in the positive electrode active material.

3.    The positive electrode for a lithium secondary battery according to claim 2, wherein a content of cobalt in the positive electrode active material is 15,000 ppm or less based on a total weight of the positive electrode active material.

4.    The positive electrode for a lithium secondary battery according to any one of claims 1 to 3, wherein a ratio of the content of nickel in the positive electrode active material to the content of manganese in the positive electrode active material is 1.5 or more and/or 3.5 or less.

5.    The positive electrode for a lithium secondary battery according to any one of claims 1 to 4, wherein a content of nickel among all elements of the positive electrode active material excluding lithium and oxygen is 60 mol% or more and/or 80 mol% or less.

6.    The positive electrode for a lithium secondary battery according to any one of claims 1 to 5, wherein a content of manganese among all elements of the positive electrode active material excluding lithium and oxygen is 20 mol% or more and/or 35 mol% or less.

7.    The positive electrode for a lithium secondary battery according to any one of claims 1 to 6, wherein a value of D90 of the positive electrode active material is 7.5 $\mu$m or less.

8.    The positive electrode for a lithium secondary battery according to any one of claims 1 to 7, wherein a value of D10 of the positive electrode active material is 1.5 $\mu$m or more and/or 2.5 $\mu$m or less.

9.    The positive electrode for a lithium secondary battery according to any one of claims 1 to 8, wherein a ratio (D50/D10) of D50 to D10 of the positive electrode active material is 1.7 or more and/or 2.4 or less.

10. An electrode assembly comprising:

a positive electrode for a lithium secondary battery according to any one of claims 1 to 9; and
a negative electrode facing the positive electrode.

11. A lithium secondary battery comprises the electrode assembly according to claim 10.

12. A method for manufacturing a positive electrode for a lithium secondary battery, comprising:

preparing a positive electrode slurry including a positive electrode active material; and
applying the positive electrode slurry onto a current collector,
wherein the positive electrode active material includes nickel and manganese,
a ratio of the content of nickel in the positive electrode active material to the content of manganese in the positive electrode active material is 8 or less, and
a particle size distribution of the positive electrode active material defined by the following Equation 1 is 0.8 or more and/or 1.3 or less:

[Equation 1]

Particle size distribution = (D90 - D10) / D50

In Equation 1, D10, D50, and D90 are particle diameters of the positive electrode active material particles at points where cumulative volume percentages in a particle size distribution obtained by a particle size analyzer are 10%, 50%, and 90%, respectively.

13. The method for manufacturing a positive electrode for a lithium secondary battery according to claim 12, wherein the preparing of the positive electrode slurry includes milling the positive electrode active material.

14. The method for manufacturing a positive electrode for a lithium secondary battery according to claim 12 or 13, wherein (a) a value of D90 of the positive electrode active material is 7.5 $\mu$m or less, and/or (b) a value of D10 of the positive electrode active material is 1.5 $\mu$m or more and/or 2.5 $\mu$m or less.

15. The method for manufacturing a positive electrode for a lithium secondary battery according to any one of claims 12 to 14, wherein a ratio (D50/D10) of D50 to D10 of the positive electrode active material is 1.7 or more and/or 2.4 or less.

# FIG. 1

170    270

I →

10

400

I' →

FIG. 2

| | Europäisches Patentamt European Patent Office Office européen des brevets | **EUROPEAN SEARCH REPORT** | **Application Number** EP 25 21 7202 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/004937 A1 (NICHIA CORP [JP]) 4 January 2024 (2024-01-04) * abstract * & US 2025/382197 A1 (MIYASHITA YOSHITOMO [JP] ET AL) 18 December 2025 (2025-12-18) * paragraphs [0080], [0129] - [0134], [0156] - [0159], [0161] - [0171], [0184] - [0186]; examples 2-7, Comparative Example 2; table 5 * ----- | 1,2,4-11 | INV. H01M4/36 H01M4/525 H01M4/505 |
| X | CN 117 913 243 A (WANHUA CHEMICAL YANTAI BATTERY MATERIAL TECH CO LTD ET AL.) 19 April 2024 (2024-04-19) * paragraphs [0049] - [0050], [0051] - [0057], [0079] - [0084], [0092] - [0095]; example 1 * ----- | 1,2,4-7, 10-14 | |
| X | GB 2 619 189 A (GUANGDONG BRUNP RECYCLING TECHNOLOGY CO LTD [CN] ET AL.) 29 November 2023 (2023-11-29) * paragraphs [0044] - [0048], [0065] - [0066]; example 2; table 1 * ----- | 1-4,6,9, 10,12, 13,15 | |
| X | US 2022/190316 A1 (SEO MIN HO [KR] ET AL) 16 June 2022 (2022-06-16) * paragraphs [0092] - [0093], [0154] - [0155], [0162] - [0163], [0179] - [0183]; examples 1, Comparative Examples 1, 5; tables 1, 4,5 * ----- | 1-3,5, 9-11,13, 15 | TECHNICAL FIELDS SEARCHED (IPC) H01M |
| X | US 2022/102715 A1 (SEO MIN HO [KR] ET AL) 31 March 2022 (2022-03-31) * paragraphs [0079], [0137], [0150]; example Comparative Example 1; tables 1, 4 * ----- -/-- | 1-3,5,6, 9-13,15 | |

The present search report has been drawn up for all claims

| Place of search | Date of completion of the search | Examiner |
|---|---|---|
| The Hague | 5 February 2026 | Venceslau Oliveira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 25 21 7202 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/363027 A1 (TOMA TAKAHIRO [JP] ET AL) 25 November 2021 (2021-11-25) * paragraphs [0204], [0240] - [0277], [0279] - [0282]; examples 1, 2, 4, 5, 7; tables 1, 2 * ----- | 1,2,4-6, 10-13 | |

TECHNICAL FIELDS
SEARCHED      (IPC)

The present search report has been drawn up for all claims

| Place of search | Date of completion of the search | Examiner |
|---|---|---|
| The Hague | 5 February 2026 | Venceslau Oliveira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7202

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2026

| Patent document cited in search report | | | Publication date | Patent family member(s) | | | Publication date |
|---|---|---|---|---|---|---|---|
| WO 2024004937 | A1 | | 04-01-2024 | DE | 112023002844 | T5 | 17-04-2025 |
| | | | | US | 2025382197 | A1 | 18-12-2025 |
| | | | | WO | 2024004937 | A1 | 04-01-2024 |
| CN 117913243 | A | | 19-04-2024 | NONE | | | |
| GB 2619189 | A | | 29-11-2023 | CN | 114256458 | A | 29-03-2022 |
| | | | | ES | 2976911 | A2 | 12-08-2024 |
| | | | | GB | 2619189 | A | 29-11-2023 |
| | | | | WO | 2023093190 | A1 | 01-06-2023 |
| US 2022190316 | A1 | | 16-06-2022 | JP | 7258373 | B2 | 17-04-2023 |
| | | | | JP | 7258373 | B6 | 13-02-2024 |
| | | | | JP | 2022521211 | A | 06-04-2022 |
| | | | | US | 2022190316 | A1 | 16-06-2022 |
| | | | | WO | 2020175782 | A1 | 03-09-2020 |
| US 2022102715 | A1 | | 31-03-2022 | JP | 7258372 | B2 | 17-04-2023 |
| | | | | JP | 2022520866 | A | 01-04-2022 |
| | | | | US | 2022102715 | A1 | 31-03-2022 |
| | | | | WO | 2020175781 | A1 | 03-09-2020 |
| US 2021363027 | A1 | | 25-11-2021 | CN | 111741928 | A | 02-10-2020 |
| | | | | EP | 3757067 | A1 | 30-12-2020 |
| | | | | JP | 7238880 | B2 | 14-03-2023 |
| | | | | JP | WO2019163846 | A1 | 18-02-2021 |
| | | | | US | 2021363027 | A1 | 25-11-2021 |
| | | | | WO | 2019163846 | A1 | 29-08-2019 |

EPO FORM P0459

For more details about this annex : see Official Journal of the European Patent Office, No. 12/82